# EUROPEAN PATENT APPLICATION

(11) **EP 4 679 252 A1**
(43) Date of publication of application: **14.01.2026**
(21) Application number: 25204767.5
(22) Date of filing: 25.09.2025
(51) Int. Cl.: G06F 3/06, G06F 16/182

(54) **METHOD AND APPARATUS FOR DATA STORAGE IN SOC, MEDIUM, DEVICE, AND SOC**

(30) Priority: 12.08.2025 CN 202511129258
(71) Applicant: XG TECH PTE. LTD., Singapore 179098 (SG)
(72) Inventor: MA, Yingbin, 179098 Singapore (SG); CHENG, Hao, 179098 Singapore (SG)
(74) Representative: Patentanwälte Magenbauer & Kollegen Partnerschaft mbB

(57) **Abstract**

Embodiments of the present disclosure disclose a method and apparatus for data storage in a system on chip (SOC), a medium, a device, and a SOC. The method includes: acquiring, by a first subsystem in the SOC through a synchronization client, a data operation request from a first application, and sending, through the synchronization client, the data operation request to a second subsystem in the SOC, and receiving, by the second subsystem through a synchronization server, the data operation request, and performing, through the synchronization server based on the data operation request, a data operation on a storage area in a preset memory corresponding to the data operation request.

## Description

### TECHNICAL FIELD

The present disclosure relates to storage technologies, and in particular, to a method and apparatus for data storage in a system on chip (SOC), a medium, a device, and a SOC.

### BACKGROUND

Typically, a plurality of subsystems, such as an in-vehicle infotainment (IVI) subsystem, a Cluster instrument subsystem, and an advanced driver assistance system (ADAS) subsystem, are run on in-vehicle SOCs for intelligent driving, intelligent cockpits, and integrated cockpit-driving systems. These subsystems often need to process a large amount of data, and a universal flash storage (UFS) is typically used to meet storage requirements. However, a concurrent access problem occurs when the plurality of subsystems access the UFS, easily leading to data inconsistency. How to enable a plurality of subsystems to securely and reliably access a UFS has become an urgent technical problem requiring resolution.

### SUMMARY

Embodiments of the present disclosure provide a method and apparatus for data storage in a SOC, a medium, a device, and a SOC, to meet a concurrent access requirement of a plurality of subsystems and improve consistency of stored data.

According to a first aspect of the embodiments of the present disclosure, there is provided a method for data storage in a SOC, including: acquiring, by a first subsystem in the SOC through a synchronization client, a data operation request from a first application, and sending, through the synchronization client, the data operation request to a second subsystem in the SOC; and receiving, by the second subsystem through a synchronization server, the data operation request, and performing, through the synchronization server based on the data operation request, a data operation on a storage area in a preset memory corresponding to the data operation request.

According to a second aspect of the embodiments of the present disclosure, there is provided an apparatus for data storage in a SOC, including: a first subsystem, configured with a synchronization client; and a second subsystem, configured with a synchronization server, where the first subsystem is configured for acquiring a data operation request from a first application through the synchronization client, and sending the data operation request to the second subsystem through the synchronization client; and the second subsystem is configured for receiving the data operation request through the synchronization server, and performing, through the synchronization server based on the data operation request, a data operation on a storage area in a preset memory corresponding to the data operation request .

According to a third aspect of the embodiments of the present disclosure, there is provided a computer readable storage medium, on which a computer program is stored, where the computer program is used for performing the method for data storage in a SOC according to any one of the above embodiments of the present disclosure.

According to a fourth aspect of the embodiments of the present disclosure, there is provided an electronic device, including: a processor; and a memory, configured for storing instructions executable by the processor, where the processor is configured for reading the executable instructions from the memory, and executing the instructions to implement the method for data storage in a SOC according to any one of the above embodiments of the present disclosure.

According to a fifth aspect of the embodiments of the present disclosure, there is provided a computer program product, where when instructions in the computer program product are executed by a processor, the method for data storage in a SOC according to any one of the above embodiments of the present disclosure is performed.

According to a sixth aspect of the embodiments of the present disclosure, there is provided a SOC, including the apparatus for data storage in the SOC according to any one of the above embodiments.

According to the method and apparatus for data storage in a SOC, the medium, the device, and the system that are provided in the above embodiments of the present disclosure, data storage in a SOC is implemented through an architecture of a client and a server. Any first subsystem in the SOC is configured with a synchronization client, and when a first application run on the first subsystem initiates a data operation request, the first subsystem may acquire the data operation request from the first application through the synchronization client, and send the data operation request to a second subsystem in the SOC through the synchronization client. The second subsystem is configured with a synchronization server, and the second subsystem receives the data operation request from the first subsystem through the synchronization server, and performs a data operation on a storage area in a preset memory corresponding to the data operation request through the synchronization server based on the data operation request. In this way, the preset memory is centrally managed by the second subsystem through the synchronization server, and the second subsystem may receive, through the synchronization server, data operation requests sent by one or more first subsystems in the SOC through synchronization clients, and perform a data operation on a storage area in the preset memory corresponding to each data operation request through the synchronization server, thereby meeting a concurrent access requirement of a plurality of subsystems, and ensuring consistency and security of data in the preset memory.

### BRIEF DESCRIPTION OF DRAWINGS

FIG 1 illustrates an exemplary application scenario of a method for data storage in a SOC according to the present disclosure;
FIG. 2 is a schematic flowchart illustrating a method for data storage in a SOC according to an exemplary embodiment of the present disclosure;
FIG. 3 is a schematic flowchart illustrating a method for data storage in a SOC according to another exemplary embodiment of the present disclosure;
FIG. 4 is a schematic flowchart illustrating a method for data storage in a SOC according to still another exemplary embodiment of the present disclosure;
FIG. 5 is a schematic flowchart illustrating a method for data storage in a SOC according to yet another exemplary embodiment of the present disclosure;
FIG. 6 is a schematic flowchart illustrating a method for data storage in a SOC according to still another exemplary embodiment of the present disclosure;
FIG. 7 is a schematic flowchart illustrating a method for data storage in a SOC according to yet another exemplary embodiment of the present disclosure;
FIG. 8 is a schematic flowchart illustrating a method for data storage in a SOC according to still another exemplary embodiment of the present disclosure;
FIG. 9 is a schematic flowchart illustrating a method for data storage in a SOC according to yet another exemplary embodiment of the present disclosure;
FIG. 10 is a schematic flowchart illustrating a method for data storage in a SOC according to still another exemplary embodiment of the present disclosure;
FIG. 11 is a schematic diagram illustrating a principle of remote synchronous storage in the related art;
FIG. 12 is a schematic diagram illustrating a principle of data storage in a SOC according to yet another exemplary embodiment of the present disclosure;
FIG. 13 is a schematic flowchart illustrating a method for data storage in a SOC according to yet another exemplary embodiment of the present disclosure;
FIG. 14 is a schematic diagram illustrating a request queue according to yet another exemplary embodiment of the present disclosure;
FIG. 15 is a schematic diagram illustrating a structure of an apparatus for data storage in a SOC according to an exemplary embodiment of the present disclosure ;
FIG. 16 is a schematic diagram illustrating a structure of an apparatus for data storage in a SOC according to another exemplary embodiment of the present disclosure; and
FIG. 17 is a diagram illustrating a structure of an electronic device according to an embodiment of the present disclosure.

### DETAILED DESCRIPTION OF THE EMBODIMENTS

To explain the present disclosure, exemplary embodiments of the present disclosure will be described in detail below with reference to the accompanying drawings. Apparently, the described embodiments are merely some, not all, of embodiments of the present disclosure. It should be understood that, the present disclosure is not limited by the exemplary embodiments.

It should be noted that the relative arrangement of components and steps, numerical expressions, and numerical values set forth in these embodiments do not limit the scope of the present disclosure, unless otherwise specifically stated.

### Overview of Disclosure

Typically, a plurality of subsystems, such as an IVI subsystem, a Cluster instrument subsystem, and an ADAS subsystem, are run on in-vehicle SOCs for intelligent driving, intelligent cockpits, and integrated cockpit-driving systems. These subsystems often need to process a large amount of data, and a UFS is typically used to meet storage requirements. However, a concurrent access problem occurs when the plurality of subsystems access the UFS, easily leading to data inconsistency. How to enable a plurality of subsystems to securely and reliably access a UFS has become an urgent technical problem requiring resolution.

### Exemplary Overview

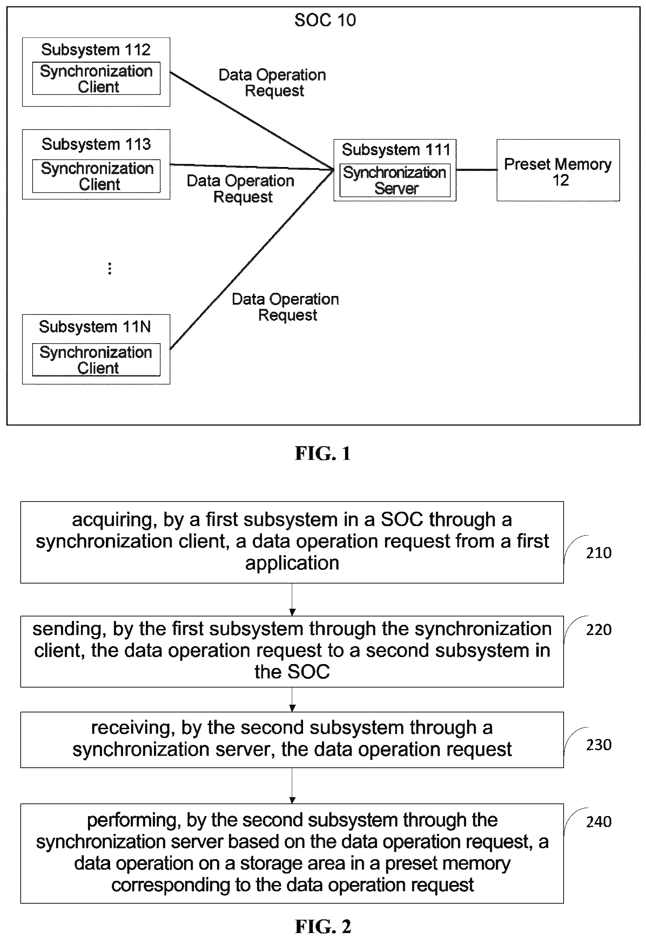

FIG 1 illustrates an exemplary application scenario of a method for data storage in a SOC according to the present disclosure. As shown in FIG. 1, a SOC 10 may include a plurality of subsystems, and in the figure, N subsystems are used as an example. The N subsystems are a subsystem 111, a subsystem 112, a subsystem 113, ..., and a subsystem 11N, respectively, where N is an integer greater than 1. Any one of the plurality of subsystems may be used as a second subsystem, and as shown, the subsystem 111 is used as a second subsystem as an example. Subsystems in the plurality of subsystems other than the second subsystem are separately used as first subsystems. For example, the subsystem 112 may be used as a first subsystem, the subsystem 113 may be used as a first subsystem, ...., and so on. Any subsystem 11i may be, for example, one of an IVI subsystem, a Cluster instrument subsystem, and an ADAS subsystem, where i = 1, 2, ..., or N. Each of the first subsystems is configured with a synchronization client, and the second subsystem is configured with a synchronization server. According to the method for data storage in a SOC of this embodiment of the present disclosure, the first subsystem in the SOC 10 acquires a data operation request from a first application through the synchronization client, and sends the data operation request to the second subsystem through the synchronization client. The second subsystem receives, through the synchronization server, the data operation request sent by the synchronization client of the first subsystem, and performs a data operation on a storage area in a preset memory corresponding to the data operation request 12 through the synchronization server. The data operation may include, but is not limited to, operations such as reading, creating, modifying, deleting, and moving of a file or a folder. In this way, the second subsystem may receive, through the synchronization server, data operation requests sent by one or more first subsystems in the SOC through synchronization clients, where the second subsystem centrally performs data operations of the respective first subsystems on the preset memory through the synchronization server, thereby meeting a concurrent access requirement of a plurality of subsystems, and ensuring consistency and security of data in the preset memory.

### Exemplary Method

FIG. 2 is a schematic flowchart illustrating a method for data storage in a SOC according to an exemplary embodiment of the present disclosure. The method for data storage in a SOC provided in this embodiment of the present disclosure may be applied to an electronic device, or a SOC. The electronic device includes, but is not limited to an in-vehicle computing platform (or referred to as an in-vehicle terminal), and the like. The SOC includes, but is not limited to an intelligent driving SOC, an intelligent cockpit SOC, a cockpit-driving integrated SOC, and the like. As shown in FIG. 2, the method for data storage in a SOC provided in this embodiment of the present disclosure may include steps:
Step 210: Acquiring, by a first subsystem in the SOC through a synchronization client, a data operation request from a first application.

The SOC may include a plurality of subsystems, and each of the subsystems is configured for implementing a specific function. The plurality of subsystems may include, but are not limited to, for example, an IVI subsystem, a Cluster instrument subsystem, and an ADAS subsystem.

In some optional embodiments, the subsystem may include a hardware component and/or a software component for implementing a specific function. The hardware components and/or software components may vary depending on the subsystems. For example, a hardware component of the IVI subsystem may include, but is not limited to, for example, an electronic control unit (ECU), and a software component of the IVI subsystem may include, but is not limited to, for example, an operating system or an application. Any one of the plurality of subsystems may be configured with a synchronization client, and the subsystem configured with the synchronization client may be used as a first subsystem For example, the Cluster instrument subsystem may be used as a first subsystem, and the ADAS subsystem may be used as a first subsystem. The synchronization client is client-side software used for implementing data storage, and is responsible for functions such as acquiring a request from a user or an application, processing local business logic, and initiating an operation request to a server.

In some optional embodiments, the first application is an application running in the first subsystem. During running of the first application, if a data operation instruction in the first application is executed, it indicates that the first application has issued a data operation request. The first subsystem may acquire the data operation request from the first application through the synchronization client.

In some optional embodiments, the data operation request is an operation request for performing a data read operation, a data write operation, or the like in the first application. The data operation request may include, but is not limited to, a data operation type, data operation address information, or the like. For example, a data read operation request may include, but is not limited to, a data operation type, data operation address information, other transmission control parameters, or the like. A data write operation request may include, but is not limited to, a data operation type, data operation address information, information on to-be-written data, other transmission control parameters, or the like. A content included in a specific data operation request is not limited.

Step 220: Sending, by the first subsystem through the synchronization client, the data operation request to a second subsystem in the SOC.

The second subsystem is a subsystem, configured with a synchronization server, in the SOC. Any subsystem in the SOC may be configured with the synchronization server, and the subsystem configured with the synchronization server is used as a second subsystem. The second subsystem may be coupled to each of the first subsystems to receive a data operation request sent by each of the first subsystems.

In some optional embodiments, after acquiring the data operation request from the first application through the synchronization client, the first subsystem sends the data operation request to the second subsystem based on a communication mechanism between the synchronization client and the synchronization server of the second subsystem, and optionally, sends the data operation request to the synchronization server in the second subsystem.

In some optional embodiments, there may be one or more first subsystems in the SOC, and each of the first subsystems may acquire the data operation request through the synchronization client and send the data operation request to the second subsystem through the synchronization client. In other words, the first subsystems and the second subsystem are in an M-to-1 relationship in numbers, where M is a positive integer, as shown in FIG. 1 .

In some optional embodiments, the first subsystem implements a corresponding function of the synchronization client by running a software program of the synchronization client.

Step 230: Receiving, by the second subsystem through a synchronization server, the data operation request.

The synchronization server is server-side software (or referred to as a backend program) compatible with the synchronization client. The synchronization server is used for data management and responding to a request from the synchronization client.

In some optional embodiments, the second subsystem receives, based on a communication mechanism between the synchronization server and the synchronization client of the first subsystem, the data operation request sent by the synchronization client.

In some optional embodiments, the second subsystem may receive data operation requests from one or more synchronization clients through the synchronization server.

Step 240: Performing, by the second subsystem through the synchronization server based on the data operation request, a data operation on a storage area in a preset memory corresponding to the data operation request.

The preset memory is a memory storing data related to the first subsystem. Optionally, the preset memory may further store data related to the second subsystem.

In some optional embodiments, the preset memory includes storage areas (or referred to as partitions) respectively corresponding to different subsystems, and the second subsystem implements data management for the storage areas respectively corresponding to the subsystems through the synchronization server. After receiving the data operation request through the synchronization server, the second subsystem performs a data operation on the storage area, corresponding to the data operation request, in the preset memory through the synchronization server, such as writing data into a storage area corresponding to the first subsystem or reading data from a storage area corresponding to the first subsystem.

In some optional embodiments, the second subsystem implements a service function of the synchronization server by running a software program of the synchronization server.

In some optional embodiments, the preset memory may be any memory with a persistent storage capability, that is, a non-volatile memory. For example, the preset memory may include, but is not limited to, a UFS memory.

In some optional embodiments, the second subsystem may be configured with a synchronization client, and the second subsystem acquires a data operation request from a second application through the synchronization client and sends the data operation request to the synchronization server in the second subsystem through the synchronization client. The second subsystem responds to the data operation request from the synchronization client through the synchronization server, and performs a data operation on a storage area in the preset memory corresponding to the second subsystem. In other words, the second subsystem may also be used as a first subsystem. The second subsystem may centrally provide a data operation service for the synchronization client of the second subsystem and a synchronization client of another first subsystem through the synchronization server.

According to the method for data storage in a SOC provided in this embodiment of the present disclosure, data storage in a SOC is implemented through an architecture of a client and a server. Any first subsystem in the SOC is configured with a synchronization client, and when a first application run on the first subsystem initiates a data operation request, the first subsystem may acquire the data operation request from the first application through the synchronization client, and send the data operation request to a second subsystem in the SOC through the synchronization client. The second subsystem is configured with a synchronization server, and the second subsystem receives the data operation request from the first subsystem through the synchronization server, and performs a data operation on a storage area in a preset memory corresponding to the data operation request through the synchronization server based on the data operation request. In this way, the preset memory is centrally managed by the second subsystem through the synchronization server, and the second subsystem may receive, through the synchronization server, data operation requests sent by one or more first subsystems in the SOC through synchronization clients, and perform a data operation on a storage area in the preset memory corresponding to each data operation request through the synchronization server, thereby meeting a concurrent access requirement of a plurality of subsystems, and ensuring consistency and security of data in the preset memory.

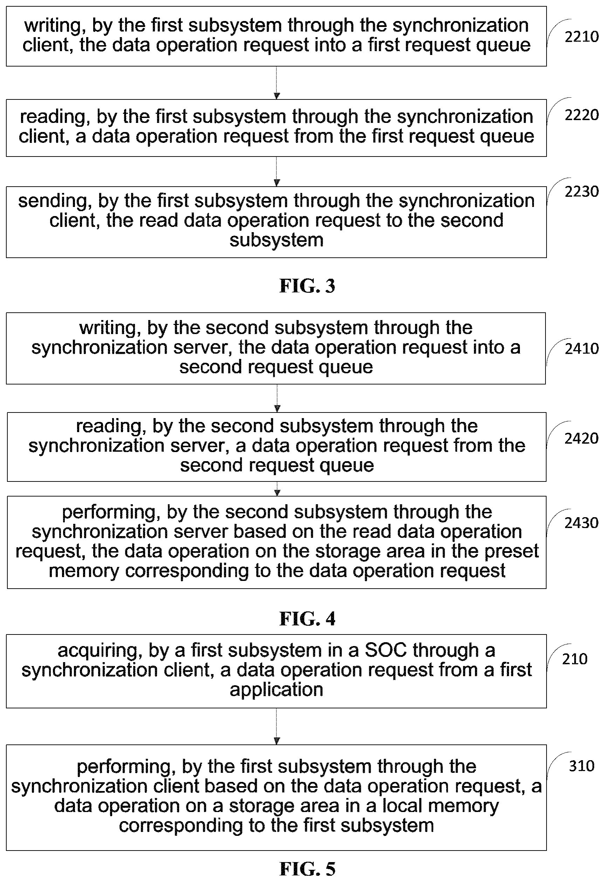

FIG. 3 is a schematic flowchart illustrating a method for data storage in a SOC according to another exemplary embodiment of the present disclosure.

In some optional embodiments, based on the embodiment shown in FIG. 2, as shown in FIG. 3, the sending, by the first subsystem through the synchronization client, the data operation request to a second subsystem in the SOC in step 220 may include:

Step 2210: Writing, by the first subsystem through the synchronization client, the data operation request into a first request queue.

The first request queue is a data structure used for representing an order of requests. The first request queue may be any type of queue. For example, the first request queue may be, but is not limited to, a first input first output (FIFO) queue, a circular queue, or the like, and may be specifically set based on an actual requirement, which is not limited in this embodiment of the present disclosure.

In some optional embodiments, after acquiring the data operation request through the synchronization client, the first subsystem writes the data operation request into a first request queue. Because the first subsystem may run one or more first applications at the same time, there may be one or more data operation requests acquired by the first subsystem through the synchronization client. Whenever a data operation request is acquired, the data operation request is written into the first request queue, so that a subsequent processing order of the data operation requests is managed through the first request queue.

Step 2220: Reading, by the first subsystem through the synchronization client, the data operation request from the first request queue.

The first subsystem reads data operation requests from the first request queue through the synchronization client based on an output order of the first request queue. For example, if the first request queue is a FIFO queue, the data operation requests are read from the first request queue in a FIFO order. In this case, the currently read data operation request may or may not be the data operation request newly written in step 2210. For example, if a data operation request B that has not been read still exists in the first request queue when a data operation request A is written into the first request queue, the data operation request B needs to be read from the first request queue firstly and subsequent processing is performed on the data operation request B, and then, the data operation request A is read, thereby ensuring a processing order of the data operation requests through the first request queue.

Step 2230: Sending, by the first subsystem through the synchronization client, the read data operation request to the second subsystem. The read data operation request refers to the data operation request that has been read.

Whenever reading a data operation request from the first request queue through the synchronization client, the first subsystem may send the read data operation request to the second subsystem, and the second subsystem responds to the data operation request through the synchronization server and performs an operation corresponding to the data operation request.

In some optional embodiments, the first subsystem may send the read data operation request to the second subsystem in any manner, such as inter-processor communication (IPC) or a network.

In this embodiment of the present disclosure, the synchronization client of the first subsystem manages an order of data operation requests from applications through the first request queue, and sends the data operation requests to the second subsystem in an orderly manner, thereby alleviating a problem that performance of the first subsystem is limited by request sending through IPC, and avoiding a loss of a data operation request. In addition, data operation concurrency of the first subsystem may be supported through the first request queue. For example, if another process intends to perform a data operation when the first subsystem is processing a current data operation request, a data operation request from the another process may be written into the first request queue, and after the processing of the current data operation request is completed, the data operation request from the another process is processed, thereby meeting a concurrent access requirement.

In some optional embodiments, the sending, by the first subsystem through the synchronization client, the read data operation request to the second subsystem in step 2230 may include:

sending, by the first subsystem through the synchronization client, the read data operation request to the second subsystem in an IPC mode.

The IPC mode is a communication mode of data exchange and collaborative work between different processors in a multi-core processor or heterogeneous system. In this embodiment of the present disclosure, different subsystems may correspond to their respective processors. The first subsystem runs software of the synchronization client through a corresponding processor, and the second subsystem runs software of the synchronization server through a corresponding processor. The processor corresponding to the first subsystem sends the data operation request to the processor corresponding to the second subsystem in the IPC mode. The IPC mode may include, but is not limited to, a share memory, a hardware mailbox, or the like, which is not specifically limited. The share memory involves direct data exchange between processors through a reserved physical memory area. In this embodiment of the present disclosure, the processor corresponding to the first subsystem and the processor corresponding to the second subsystem may exchange data operation requests through the share memory. The hardware mailbox involves a process in which a sender processor writes a data operation request into a register and triggers an interrupt request for a receiver processor, and the receiver processor reads the data operation request from the register in response to the interrupt request. In this embodiment of the present disclosure, the sender processor is, for example, a processor corresponding to the first subsystem. The receiver processor is, for example, a processor corresponding to the second subsystem.

In this embodiment of the present disclosure, the first subsystem and the second subsystem may communicate with each other in the IPC mode to implement transmission of data operation requests and avoid dependence on a network, so that a subsystem that does not support the network can still implement data storage through an architecture of a client and a server of this embodiment of the present disclosure, thereby improving versatility of the method of the present disclosure.

FIG. 4 is a schematic flowchart illustrating a method for data storage in a SOC according to still another exemplary embodiment of the present disclosure.

In some optional embodiments, based on any one of the above embodiments, the performing, by the second subsystem through the synchronization server based on the data operation request, a data operation on a storage area in a preset memory corresponding to the data operation request in step 240 may include:
Step 2410: Writing, by the second subsystem through the synchronization server, the data operation request into a second request queue.

The second request queue is a data structure used for representing an order of data operation requests received by the synchronization server. The second request queue may be any type of queue. For example, the second request queue may be, but is not limited to, a FIFO queue, a circular queue, or the like.

In some optional embodiments, the second subsystem may receive data operation requests from one or more synchronization clients through the synchronization server, and whenever receiving a data operation request, the second subsystem writes the data operation request into the second request queue, to manage an response order of the data operation requests through the second request queue.

Step 2420: Reading, by the second subsystem through the synchronization server, a data operation request from the second request queue.

The second subsystem reads data operation requests from the second request queue through the synchronization server in an output order of the second request queue. For example, if the second request queue is a FIFO queue, the data operation requests are read from the second request queue in a FIFO order. In this case, the currently read data operation request may or may not be the data operation request newly written in step 2410. For example, if a data operation request D that has not been read still exists in the second request queue when a data operation request C is written into the second request queue, the second subsystem first reads the data operation request D from the second request queue through the synchronization server, and then reads the data operation request C after a response to the data operation request D is completed, thereby managing an response order of the data operation requests through the second request queue.

Step 2430: Performing, by the second subsystem through the synchronization server based on the read data operation request, the data operation on the storage area in the preset memory corresponding to the data operation request.

After reading the data operation request through the synchronization server, the second subsystem performs the data operation on the storage area in the preset memory corresponding to the data operation request. For example, if the data operation request is a write data operation request, data is written into the corresponding storage area based on the write data operation request.

In this embodiment of the present disclosure, the synchronization server of the second subsystem manages, through the second request queue, the data operation requests received from the first subsystems, so that a plurality of first subsystems can be supported in accessing the second subsystem at the same time, thereby meeting a concurrent access requirement of the plurality of subsystems to the preset memory. In addition, caching a plurality of data operation requests through the second request queue may alleviate a problem that performance on the second subsystem side is limited by block input/output (block IO).

FIG. 5 is a schematic flowchart illustrating a method for data storage in a SOC according to yet another exemplary embodiment of the present disclosure.

In some optional embodiments, based on any one of the above embodiments, as shown in FIG. 5, the method of the embodiments of the present disclosure may further include:
Step 310: Performing, by the first subsystem through the synchronization client based on the data operation request, a data operation on a storage area in a local memory corresponding to the first subsystem.

The local memory is a storage space, or referred to as a memory space, that may be directly addressed by the processor of the first subsystem in the SOC. The local memory may be, but is not limited to, for example, a double data rate synchronous dynamic random access memory (DDR SDRAM) or another type of random access memory (RAM). The local memory includes storage areas respectively corresponding to the subsystems.

In some optional embodiments, the first subsystem stores data related to the first subsystem synchronously through the local memory and the preset memory. After acquiring the data operation request through the synchronization client, the first subsystem performs a data operation on the storage area in the local memory corresponding to the first subsystem through the synchronization client, and sends the data operation request to the second subsystem through the synchronization client. The data operation is performed on the storage area in the preset memory corresponding to the first subsystem through the second subsystem, thereby implementing local and remote synchronous data operations, and ensuring consistency of data, related to the first subsystem, in the local memory and the preset memory. In addition, the data in the preset memory may be used as a backup of the data in the local memory, thereby helping improve data security.

In some optional embodiments, the second subsystem may be further configured with a synchronization client, and the second subsystem acquires a data operation request from a second application through the synchronization client. The second subsystem performs a data operation on a storage area in the local memory corresponding to the second subsystem through the synchronization client, and sends the data operation request to the synchronization server in the second subsystem through the synchronization client. The second subsystem responds to the data operation request from the synchronization client through the synchronization server, and performs a data operation on a storage area in the preset memory corresponding to the second subsystem. In other words, the second subsystem may also be used as a first subsystem, and synchronous storage of data is implemented through the local memory and the preset memory.

In some optional embodiments, the first subsystem acquires the data operation request from the first application, and directly performs the data operation on the local memory based on the data operation request, without the need to perform the data operation on the local memory through the synchronization client.

In some optional embodiments, the first subsystem may manage the local memory through a local memory file system. For example, the first subsystem may manage the local memory through a RAM file system to implement storage and update of the data related to the first subsystem.

In this embodiment of the present disclosure, the first subsystem ensures consistency of data, related to the first subsystem, in the local memory and the preset memory through local and remote synchronous operations, and the data in the preset memory may be used as a backup of the data in the local memory, thereby helping improve data security.

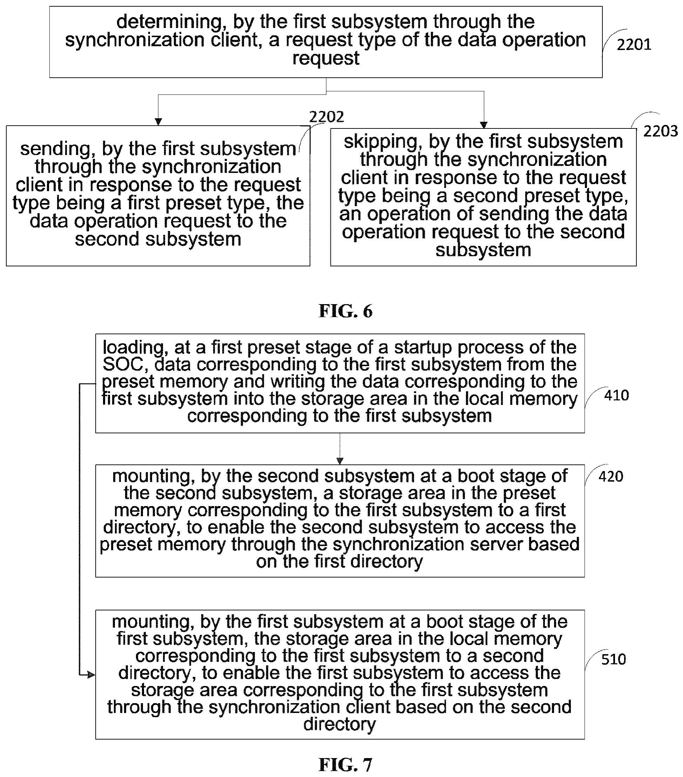

FIG. 6 is a schematic flowchart illustrating a method for data storage in a SOC according to still another exemplary embodiment of the present disclosure.

In some optional embodiments, based on any one of the above embodiments, as shown in FIG. 6, the sending, by the first subsystem through the synchronization client, the data operation request to a second subsystem in the SOC in step 220 may include:
Step 2201: Determining, by the first subsystem through the synchronization client, a request type of the data operation request.

The request type refers to a data operation type requested by the data operation request. The request type may include, but is not limited to data operation types such as reading, creating, modifying, and deleting of a file or a directory.

In some optional embodiments, the first subsystem may extract information indicating a request type from the data operation request through the synchronization client, and determine the request type of the data operation request based on the information indicating the request type.

Step 2202: Sending, by the first subsystem through the synchronization client in response to the request type being a first preset type, the data operation request to the second subsystem.

The first preset type refers to a data operation type for updating data in the storage area, for example, a data operation type for updating, including creating, modifying, or deleting of a file or a directory. Performing the data operation of the first preset type results in an increase, a decrease, or a change in the data. To ensure data consistency between the local memory and the remote preset memory, while the data operation is performed on the local memory, the data operation request is sent to the second subsystem, so that the second subsystem performs a synchronous operation on the remote preset memory. For example, in terms of an operation of creating a new file, a same new file needs to be created in both the local memory and the preset memory.

Step 2203: Skipping, by the first subsystem through the synchronization client in response to the request type being a second preset type, an operation of sending the data operation request to the second subsystem.

The second preset type refers to a type of a data operation that does not update data in the storage area, for example, a read data operation type, which only reads data from the storage area without changing the data in the storage area.

In some optional embodiments, if the request type is the second preset type, the first subsystem performs the data operation on the local memory through the synchronization client without sending the data operation request to the second subsystem.

In some optional embodiments, if the request type is a read data operation and data corresponding to the data operation request does not exist in the local memory, the data operation request may be sent to the second subsystem, and the data corresponding to the data operation request is read from the preset memory through the synchronization server of the second subsystem.

In some optional embodiments, the second subsystem acquires a data operation request from a second application through the synchronization client, and determines a request type of the data operation request through the synchronization client. In response to the request type being a first preset type, the second subsystem synchronously performs a data operation on the local memory, sends the data operation request to the synchronization server of the second subsystem, and performs a data operation on the preset memory through the synchronization server. In response to the request type being a second preset type, the second subsystem performs a data operation on the local memory through the synchronization client, without sending the data operation request to the synchronization server.

In this embodiment of the present disclosure, for an operation request of the second preset type that does not affect data, a corresponding data operation may be performed on only the local memory, avoiding sending the data operation request to the second subsystem, thereby improving operation efficiency. For an operation request of a data update type, data operations are synchronously performed on the local memory and the preset memory to ensure data consistency between the local memory and the preset memory. In addition, the local memory and the preset memory perform backups for each other. In this case, when a problem occurs in either the local memory or the preset memory, data may be restored through the other, thereby improving data security.

FIG. 7 is a schematic flowchart illustrating a method for data storage in a SOC according to yet another exemplary embodiment of the present disclosure.

In some optional embodiments, based on any one of the above embodiments, the second subsystem manages the preset memory through a UFS file system.

In some optional embodiments, based on any one of the above embodiments, as shown in FIG. 7, the method of the embodiments of the present disclosure further includes:
Step 410: loading, at a first preset stage of a startup process of the SOC, data corresponding to the first subsystem from the preset memory and writing the data corresponding to the first subsystem into the storage area in the local memory corresponding to the first subsystem.

The first preset stage refers to a universal boot (UBoot) stage of the startup process of the SOC. The UBoot stage is a critical secondary boot loader stage in the startup process of the SOC. At the UBoot stage, hardware initialization is completed, an operating system kernel is loaded, and control is handed over.

In some optional embodiments, at the first preset stage of the startup process of the SOC, a secondary boot loader is executed to load the data corresponding to the first subsystem from the preset memory, and the data corresponding to the first subsystem is written into the storage area in the local memory corresponding to the first subsystem. For example, data in a partition corresponding to each subsystem in the UFS is loaded to a partition of each subsystem in the DDR RAM.

Step 420: Mounting, by the second subsystem at a boot stage of the second subsystem, a storage area in the preset memory corresponding to the first subsystem to a first directory, to enable the second subsystem to access the preset memory through the synchronization server based on the first directory.

The boot stage of the second subsystem refers to a UBoot stage of booting the second subsystem. Mounting the storage area in the preset memory corresponding to the first subsystem to the first directory means attaching a content of the storage area corresponding to the first subsystem to a specific node (or referred to as a mount point) of a directory tree, to make the storage area become a file system accessible to an operating system. The first directory is a directory that accesses the directory tree from the specific node.

In some optional embodiments, the second subsystem may mount the storage area in the preset memory corresponding to the first subsystem to the first directory by running a bootstrap program, to enable the second subsystem to access the storage area in the preset memory corresponding to the first subsystem through the synchronization server based on the first directory, to implement data management on the storage area.

In some optional embodiments, the storage area in the preset memory corresponding to the first subsystem may store an image file (or referred to as img) of the first subsystem. Mounting the storage area corresponding to the first subsystem to the first directory enables the first subsystem to load the image file through the second subsystem, thereby implementing boot of the first subsystem.

In this embodiment of the present disclosure, at the boot stage of the second subsystem, the storage area in the remote preset memory corresponding to the first subsystem is mounted to the first directory, to enable the second subsystem to access the preset memory through the synchronization server based on the first directory, so that an effective access path is provided for the second subsystem to access the preset memory.

In some optional embodiments, as shown in FIG. 7, the method of the embodiments of the present disclosure may further include:
Step 510: mounting, by the first subsystem at a boot stage of the first subsystem, the storage area in the local memory corresponding to the first subsystem to a second directory, to enable the first subsystem to access the storage area corresponding to the first subsystem through the synchronization client based on the second directory.

The boot stage of the first subsystem is a UBoot stage of the first subsystem. The first subsystem implements startup of the first subsystem by running a UBoot bootstrap program, for example, loading an image file of the first subsystem and booting the first subsystem based on the image file. The mounting, by the first subsystem at the boot stage of the first subsystem, the storage area in the local memory corresponding to the first subsystem to the second directory is connecting a content of the storage area in the local memory corresponding to the first subsystem to a mount point of a directory tree, to make the storage area become a local file system accessible to an operating system of the first subsystem. The second directory is a directory that accesses the directory tree from the mount point.

In some optional embodiments, after the first subsystem mounts the storage area in the local memory corresponding to the first subsystem to the second directory, the synchronization client can perform a data operation on the local memory based on the second directory. In this case, the first application may access the storage area in the local memory corresponding to the first subsystem through a path in the second directory. For example, the data operation request from the first application may include an access path to be operated. After acquiring the data operation request through the synchronization client, the first subsystem may obtain the access path based on the data operation request, and then perform a corresponding data operation on the corresponding storage area in the local memory based on the access path and the second directory.

In this embodiment of the present disclosure, at the boot stage of the first subsystem, the content of the storage area in the local memory corresponding to the first subsystem is mounted to the second directory, to enable the first subsystem to access the storage area through the synchronization client based on the second directory, so that an effective access path is provided for the first application in the first subsystem to access the local memory provide, thereby implementing local caching of related data of the first subsystem, which may perform backups with the remote preset memory for each other, thus improving data security. In addition, since the related data is cached locally, a read data operation may directly read data from the local memory, avoiding reading data from the remote memory, thereby improving reading efficiency.

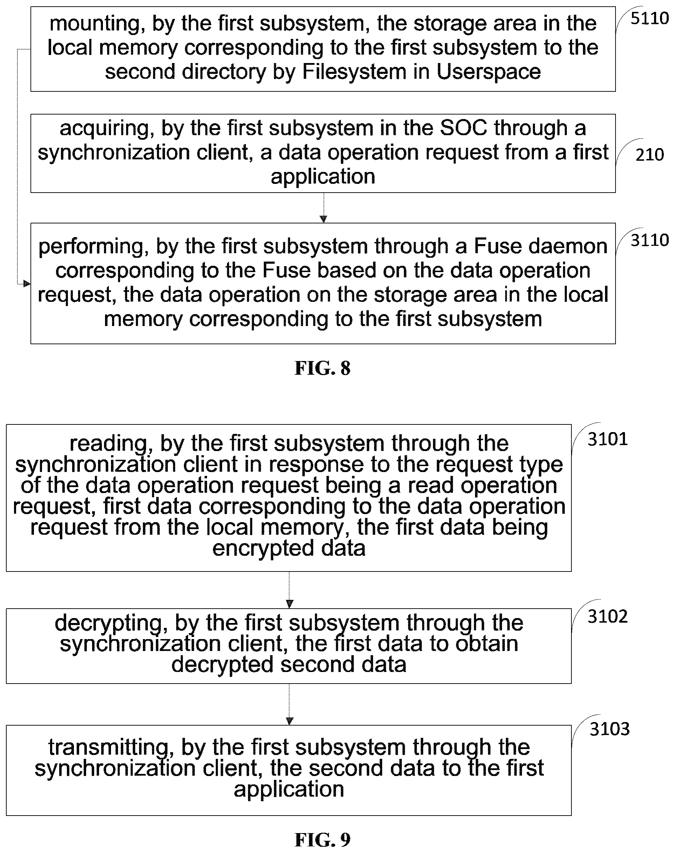

FIG. 8 is a schematic flowchart illustrating a method for data storage in a SOC according to still another exemplary embodiment of the present disclosure.

In some optional embodiments, as shown in FIG. 8, the mounting, by the first subsystem, the storage area in the local memory corresponding to the first subsystem to a second directory in step 510 may include:
Step 5110: Mounting, by the first subsystem, the storage area in the local memory corresponding to the first subsystem to the second directory by Filesystem in Userspace (Fuse).

The Filesystem in Userspace (Fuse) is a technology that implements a complete file system function in user mode. The first subsystem mounts the storage area in the local memory corresponding to the first subsystem to the second directory by Fuse, thereby implementing a local file system in a user space.

The performing, by the first subsystem through the synchronization client based on the data operation request, a data operation on a storage area in a local memory corresponding to the first subsystem in step 310 may include:
Step 3110: Performing, by the first subsystem through a Fuse daemon corresponding to the Fuse based on the data operation request, the data operation on the storage area in the local memory corresponding to the first subsystem.

The Fuse daemon is a core execution component of the Fuse, responsible for a file operation request forwarded by a processor and implementing specific logic in user mode. The first subsystem forwards the data operation request to the local memory through the Fuse daemon, and the local memory performs the data operation on the storage area corresponding to the first subsystem in response to the data operation request.

In some optional embodiments, the first subsystem determines a request type of the data operation request through the Fuse daemon, and performs the data operation on the storage area in the local memory corresponding to the first subsystem in response to the request type being a second preset type.

In some optional embodiments, in response to the request type of the data operation request being a first preset type, the first subsystem performs the data operation on the storage area in the local memory corresponding to the first subsystem based on the data operation request through the Fuse daemon corresponding to the Fuse, and sends the data operation request to the second subsystem.

In some optional embodiments, the Fuse daemon is a critical component in a Fuse frame, responsible for processing a file system request in a user space. The Fuse daemon is a background process created by a Fuse kernel module, responsible for reading and processing a file system operation request received from a /dev/fuse device, such as a reading, writing, creating, or deleting of operation request, and returning a processing result to the kernel module. The /dev/fuse device is a communication node device in a Fuse architecture, serving as a bidirectional data channel between the kernel module and the Fuse daemon. When a user performs an operation on a mounted Fuse file system through the first application, a virtual file system (VFS) forwards a data operation request to the Fuse kernel module. The kernel module writes the data operation request into a request queue and informs the Fuse daemon. The Fuse daemon reads the data operation request from the /dev/fuse device, calls a corresponding handler function after parsing, performs the corresponding data operation, and writes an operation result back into the /dev/fuse device. The kernel module returns the operation result to the first application.

In this embodiment of the present disclosure, the first subsystem mounts the storage area of the local memory to the second directory by Fuse, then performs the data operation through the Fuse daemon, and implements a function of caching the data operation request by using the request queue of the Fuse architecture, thereby meeting a concurrent data access requirement of the first subsystem. Moreover, through the Fuse architecture, a non-privileged user is allowed to extend the file system function without modifying kernel code, thereby avoiding an impact on the operating system.

FIG. 9 is a schematic flowchart illustrating a method for data storage in a SOC according to yet another exemplary embodiment of the present disclosure.

In some optional embodiments, based on any one of the above embodiments, the performing, by the first subsystem through the synchronization client based on the data operation request, a data operation on a storage area in a local memory corresponding to the first subsystem in step 310 may include:
Step 3101: Reading, by the first subsystem through the synchronization client in response to the request type of the data operation request being a read operation request, first data corresponding to the data operation request from the local memory, the first data being encrypted data.

The first subsystem responds to the data operation request through the synchronization client, and determines the request type based on the data operation request. If the request type is a read operation request (or referred to as a read data operation type), it indicates that data needs to be read from the local memory. In this case, the first data corresponding to the data operation request may be read from the local memory based on the data operation request, the first data being encrypted data, in other words, data previously written into the local memory is encrypted.

Step 3102: Decrypting, by the first subsystem through the synchronization client, the first data to obtain decrypted second data.

The first subsystem may decrypt the first data through the synchronization client according to a pre-configured decryption rule corresponding to an encryption rule to obtain the decrypted second data. A specific encryption rule and a specific decryption rule are not limited.

Step 3103: Transmitting, by the first subsystem through the synchronization client, the second data to the first application.

After obtaining the decrypted second data through the synchronization client, the first subsystem transmits the second data to the first application through the synchronization client.

In some optional embodiments, the first application and the synchronization client may implement data exchange in any feasible communication mode, such as inter-process communication or a share memory, which is not limited in this embodiment of the present disclosure.

In this embodiment of the present disclosure, data security may be improved by storing encrypted data in the local memory.

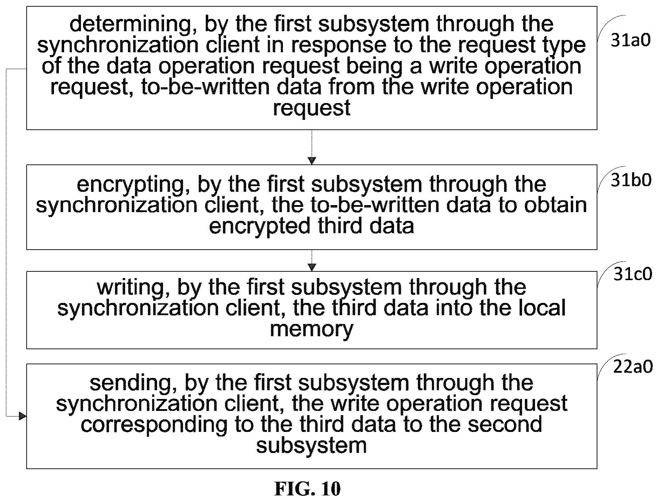

FIG. 10 is a schematic flowchart illustrating a method for data storage in a SOC according to still another exemplary embodiment of the present disclosure.

In some optional embodiments, based on any one of the above embodiments, as shown in FIG. 10, the performing, by the first subsystem through the synchronization client based on the data operation request, a data operation on a storage area in a local memory corresponding to the first subsystem in step 310 may include:
Step 31a0: Determining, by the first subsystem through the synchronization client in response to the request type of the data operation request being a write operation request, to-be-written data from the write operation request.

The first subsystem determines, through the synchronization client, that the request type of the data operation request is a write operation request (or referred to as a write data operation request), and may determine to-be-written data from the write operation request.

Step 31b0: Encrypting, by the first subsystem through the synchronization client, the to-be-written data to obtain encrypted third data.

The first subsystem may encrypt the to-be-written data through the synchronization client according to a pre-configured encryption rule to obtain the encrypted third data. A specific encryption rule may be set to any feasible encryption algorithm rule based on an actual requirement.

Step 31c0: Writing, by the first subsystem through the synchronization client, the third data into the local memory.

After obtaining the encrypted third data through the synchronization client, the first subsystem writes the third data into the storage area in the local memory corresponding to the first subsystem through the synchronization client.

The sending, by the first subsystem through the synchronization client, the data operation request to a second subsystem in the SOC in step 220 includes:
Step 22a0: Sending, by the first subsystem through the synchronization client, the write operation request corresponding to the third data to the second subsystem.

In terms of the write operation request, the first subsystem generates, through the synchronization client, the write operation request corresponding to the third data, and sends the write operation request corresponding to the third data to the second subsystem. The second subsystem writes the third data into a storage area in the preset memory corresponding to the write operation request through the synchronization server.

In this embodiment of the present disclosure, to write data through the synchronization client, the first subsystem encrypts the to-be-written data, writes the encrypted third data into the local memory, and sends the data operation request corresponding to the third data to the second subsystem, so that the third data is written into the preset memory through the synchronization server of the second subsystem, thereby implementing local and remote synchronous and encrypting storage and further improving data security.

Because some hardware resources in the SOC are unique, which are shared by the subsystems, the shared resources need to be managed and controlled through a virtual machine monitor (hypervisor) to implement virtualization of the hardware resources. However, there is a performance bottleneck in implementing UFS virtualization through a hypervisor. To be specific, when a plurality of virtual machines access a UFS device at the same time, the concurrent access requests need to be ensured, and a resource contention problem needs to be handled. In this case, fair usage of UFS resources by the plurality of virtual machines needs to be ensured to prevent some virtual machines from occupying excessive bandwidth or I/O resources. Furthermore, data synchronization and consistency also need to be ensured. When the plurality of virtual machines access a same piece of data, the hypervisor needs to ensure that the data is not damaged. Moreover, UFS fault recovery and redundancy management become very complex due to the introduction of the virtualization. Therefore, considering the complexity, scalability, performance bottleneck, compatibility, and fault recovery of implementing UFS virtualization through the hypervisor, it is difficult for the hypervisor to support UFS virtualization. That is, during coordinated processing between various subsystems, the UFS may be exclusively used by a particular subsystem, while other subsystems need to access the UFS by means of remote storage.

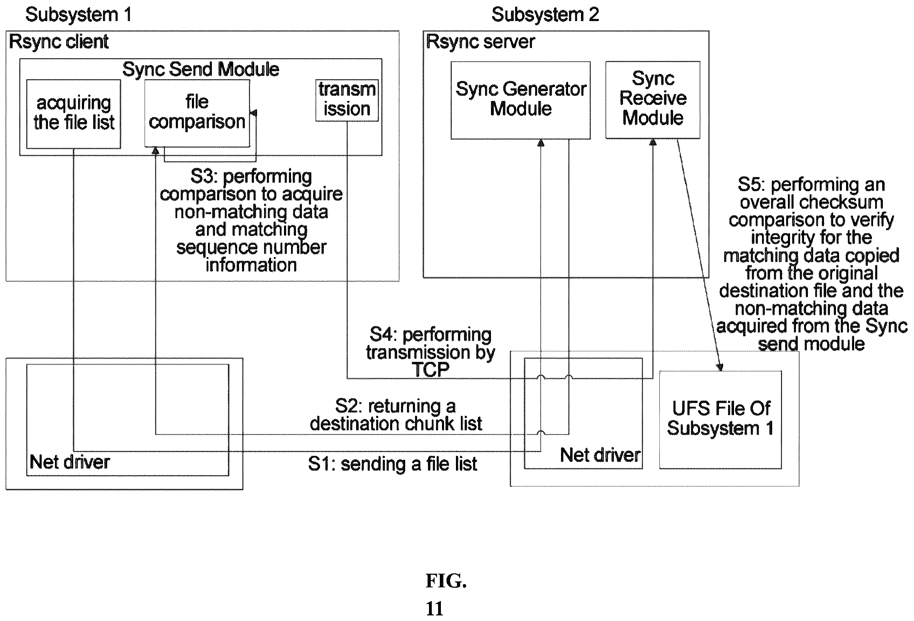

FIG. 11 is a schematic diagram illustrating a principle of remote synchronous storage in the related art. As shown in FIG. 11, remote synchronization in the related art is synchronization based on a file system level. Rsync client represents a remote synchronization client, and Rsync server represents a remote synchronization server. A subsystem 1 and a subsystem 2 perform file system-level synchronization through Rsync client and Rsync server. Rsync client includes a Sync send module, and Net driver represents a network driver. Rsync server includes a Sync generator module and a Sync receive module. A synchronization procedure includes steps:
S1: Sending a file list. To be specific, the Sync send module initiates a backup procedure, including acquiring a file list and sending the file list to the Sync generator module.
S2: Returning a destination chunk list. To be specific, the Sync generator module acquires information about a chunk (data chunk) list of a destination file, for example, a strong and weak checksum, and sends the destination chunk list to the Sync send module. Chunk refers to smaller and manageable parts into which data are divided. For example, during data transmission or storage, a large file may be divided into a plurality of chunks for transmission or storage to improve processing efficiency and reliability
S3: Performing comparison to acquire non-matching data and matching sequence number information. To be specific, the Sync send module performs file comparison to acquire matching chunk numbers and non-matching data information.
S4: Performing transmission by Transmission Control Protocol (TCP). To be specific, a transmission module sends matching and non-matching information to the Sync receive module by TCP.
S5: Performing an overall checksum comparison to verify integrity for the matching data copied from the original destination file and the non-matching data acquired from the Sync send module. To be specific, the Sync receive module recombines and saves the destination file to a UFS file of the subsystem 1 through block IO (a disk read/write operation).

It can be learned that in the remote synchronization solution of the related art, a single synchronization flow requires a plurality of interactions between the subsystem 1 and the subsystem 2, resulting in a relatively complex procedure and high synchronization overheads. In a file backup process, if another process operates on the backed up files, a data inconsistency problem may occur, making it difficult to meet a concurrent access requirement. Moreover, the data is not encrypted before transmission, posing a data security risk. Furthermore, communication between Rsync client and Rsync server depends on a network. If the subsystem 1 does not support a network interface card, data communication cannot be performed.

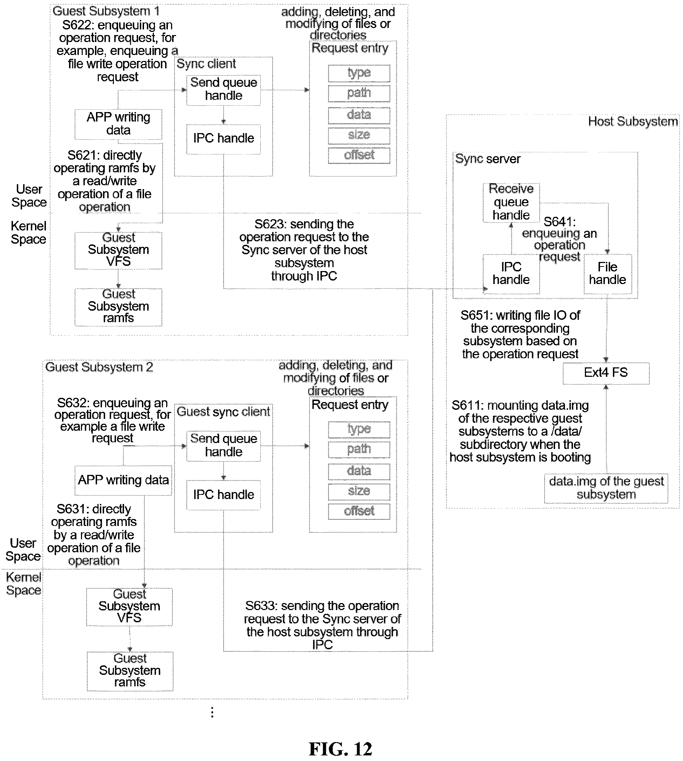

In some optional embodiments, FIG. 12 is a schematic diagram illustrating a principle of data storage in a SOC according to yet another exemplary embodiment of the present disclosure. As shown in FIG. 12, a host subsystem represents a primary subsystem, a guest subsystem represents a secondary subsystem, where the host subsystem serves as a second subsystem in the present disclosure, and the guest subsystem serves as a first subsystem in the present disclosure. Guest subsystems include a guest subsystem 1, a guest subsystem 2, ...., and so on, any one of which includes a synchronization client (Sync client), and the host subsystem includes a synchronization server (Sync server). "Send queue handle" represents a send queue handle, and "IPC handle" represents an IPC handle. "Send queue handle" is a logical pointer for uniquely identifying a created queue instance. The Sync client indirectly performs a critical operation on a send queue through the send queue handle. The send queue is the first request queue described above. The IPC handle is an inter-process communication handle, and is a unique abstract identifier for indirectly identifying and operating cross-process shared resources. The Sync client implements resource sharing between different processes through the IPC handle, for example, the first request queue. "Request entry" is an instance of a data operation request, where "type", "path", "data", "size", and "offset" represent contents included in the data operation request. "type" represents a data operation type, "path" represents a data access path, namely, data operation address information, "data" represents a data content to be written or a data buffer read from a file, "size" represents a size of data to be operated on, and "offset" represents a starting position offset of a file operation. A guest subsystem VFS is a virtual file system. A guest subsystem RAM file system (ramfs) is a local file system of a subsystem. "Receive queue handle" is a receive queue handle, similar to the send queue handle. The Sync server performs a critical operation on a receive queue through the receive queue handle. "File handle" is a file handle. The file handle is a unique abstract identifier used for identifying and operating an open file or other input/output (I/O) device objects. The Sync server may access a file through the file handle without directly operating a physical address, thus implementing abstract management of file resources. A fourth extended file system (Ext4 FS) is a journaling file system with features such as supporting ultra-large storage and a journaling function. "data.img" of the guest subsystem represents a data image file of the guest subsystem. Based on the architecture shown in FIG. 12, as an example, the first subsystem is the guest subsystem 1, and the method of the embodiments of the present disclosure may include steps:
S611: Mounting data.img of the respective guest subsystems to a /data/ subdirectory when the host subsystem is booting. That is, the contents of the storage areas in the preset memory corresponding to the respective first subsystems are mounted to the first directory.
S621: Directly operating ramfs by a read/write operation of a file operation. To be specific, when an application (the first application) writes data, the guest subsystem 1 acquires a file read/write operation request, and performs an operation on a local ramfs based on the file read/write operation request. Specifically, the operation on the ramfs of the guest subsystem 1 is implemented through a VFS of the guest subsystem 1.
S622: Enqueuing an operation request. To be specific, the guest subsystem 1 acquires a data operation request, for example, a file write operation request, from the first application through the Sync client, and writes the data operation request into the send queue. Specifically, the Sync client performs an enqueue operation through the send queue handle.
S623: Sending the operation request to the Sync server (Synchronization server) of the host subsystem through IPC. To be specific, the Sync client of the guest subsystem 1 sends the data operation request to the synchronization server of the second subsystem through IPC. Specifically, the sending operation is implemented through the IPC handle.
S631 to S633 of the guest subsystem 2 are similar to S621 to S622 of the guest subsystem 1 above, and are not described in detail herein.
S641: Enqueuing an operation request. To be specific, the Sync server of the host subsystem receives a data operation request through the IPC handle, and then performs an enqueue operation through the receive queue handle to write the data operation request into the receive queue.
S651: Writing file IO of the corresponding subsystem based on the operation request. To be specific, the Sync server sequentially reads data operation requests (represented as the request entry) from the receive queue through the receive queue handle, calls a corresponding data operation function, for example, a data operation function of the Ext4 FS, through the file handle, and performs a write file operation through the data operation function. The file IO refers to performing core operations of reading and writing data on a storage device through the file system.

In some optional embodiments, in step S611 to step S651 above, data security may be ensured based on encrypting storage.

It can be learned that in the method of the embodiments of the present disclosure, file operation-level remote synchronization is implemented through the Sync client in the guest subsystem and the Sync server in the host subsystem, and whenever there is a file update, the Sync client of the guest subsystem sends a data operation request used for the update to the host subsystem in real time for synchronous update. Furthermore, concurrent access is implemented by caching data operation requests through the send queue, and concurrent access by a plurality of subsystems is implemented by caching data operation requests through the receive queue, thereby meeting a concurrent access requirement and ensuring data consistency. Referring to FIG. 12, compared with the remote synchronization in FIG. 11, the remote synchronization process in this embodiment of the present disclosure involves only one IPC sending procedure in a single synchronization process, thereby effectively reducing the number of interactions between the subsystems and simplifying the synchronization procedure. Moreover, in the present disclosure, data exchange is performed through IPC without relying on a network, so that a transmission delay may be reduced and a throughput is improved. Furthermore, data security may be further improved through encrypting storage.

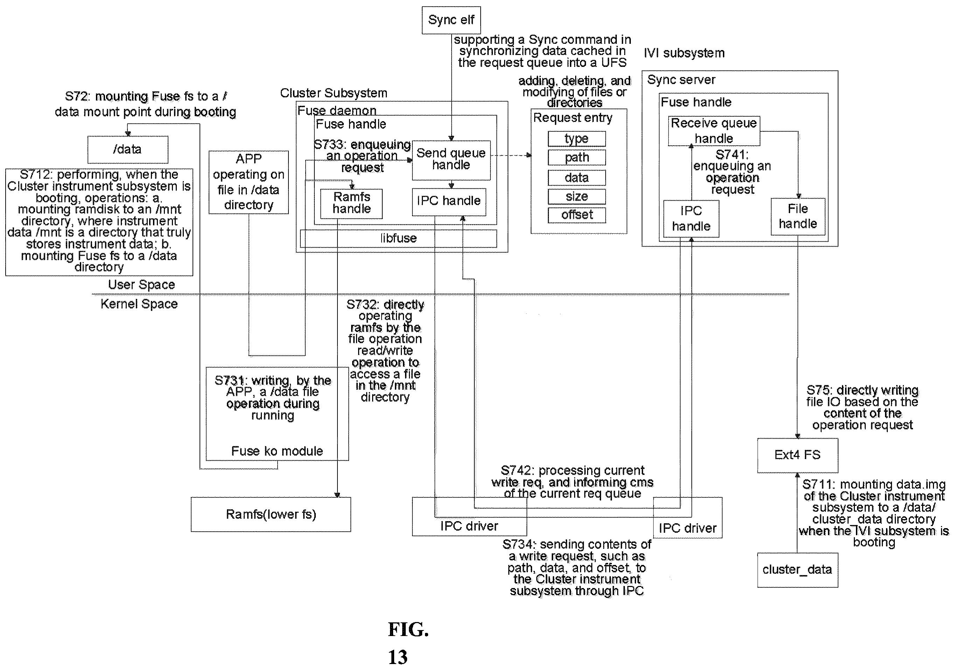

In some optional embodiments, FIG. 13 is a schematic flowchart illustrating a method for data storage in a SOC according to yet another exemplary embodiment of the present disclosure. As shown in FIG. 13, the Sync client is implemented by a Fuse user file system. To be specific, a Fuse hook mechanism is used to intercept or modify a file system operation request, the operation request is sent to the host subsystem through IPC, and a UFS is updated through the Sync server of the host subsystem. A Fuse hook is to insert an interception point into a system call or even processing procedure, and add a hook function to a communication layer between a user mode and a kernel mode, for intercepting a specific file operation request. "Fuse daemon" refers to a Fuse daemon, or a daemon for short. "Fuse handle" is a Fuse handle, through which the daemon may implement a synchronization function of a Sync client. "Ramfs handle" is a local file system handle, used for operating a local file system Ramfs (lower fs). "APP operating on file in /data directory" means that the first application performs a file operation on a file in the /data directory. "IPC driver" represents an IPC driver. For other symbols, refer to FIG. 12. Details are not repeated herein. As an example, the guest subsystem is a Cluster instrument subsystem, and the host subsystem is an IVI subsystem. In this case, the method provided in the embodiments of the present disclosure may include steps:
S711: Mounting data.img of the Cluster instrument subsystem to a /data/cluster_data directory when the IVI subsystem is booting, referring to step S611 above.
S712: Performing, when the Cluster instrument subsystem is booting, operations: a. mounting ramdisk to an /mnt directory, where instrument data /mnt is a directory that truly stores instrument data; b. mounting Fuse fs to a /data directory. Mounting ramdisk to an /mnt directory refers to associating a virtual disk (ramdisk) simulated by memory with an /mnt path in the file system, to allow a user to read/write data in the memory by accessing /mnt or its subdirectory. Mounting Fuse fs to a /data directory refers to associating with the /data directory by implementing customized file system logic in user space and using a Fuse kernel module as a bridge, where all operations accessing the /data directory are to be transparently transmitted to a Fuse processing program (that is, the daemon) in the user space, instead of directly reading/writing a physical disk.
S72: Mounting Fuse fs to a /data mount point during booting.
S731: Writing, by the APP, a /data file operation during running. To be specific, the first application initiates a file operation request and transparently transmits the file operation request to the Fuse daemon in the user space through a Fuse ko module (that is, the Fuse kernel module).

In some optional embodiments, a VFS may also be included between the Fuse ko module and the APP, which is not shown in the figure.

S732: Directly operating ramfs by the file operation read/write operation to access a file in the /mnt directory. To be specific, an operation on Ramfs is implemented by using the Ramfs handle in the Fuse daemon through libfuse and the Fuse ko module, where libfuse is a user space library that provides a framework for implementing a customized file system.

S733: Enqueuing an operation request. To be specific, the Fuse daemon writes a file operation request into a send queue through the send queue handle.

S734: Sending contents of a write request, such as path, data, and offset, to the Cluster instrument subsystem through IPC.

S741: Enqueuing an operation request. To be specific, the Sync server of the IVI subsystem writes a received file operation request into a receive queue, referring to step S641 above.

S75: Directly writing file IO based on the content of the operation request, referring to step S651 above.

In FIG. 13, "Sync elfi" refers to an executable synchronization file in an elf format, which may be used for supporting a Sync command in synchronizing data cached in the send queue into the UFS for persistent storage.

In some optional embodiments, a specific processing procedure of a Fuse architecture may be simplified through a Fuse passthrough function. In the Fuse processing procedure in FIG. 13, each file operation needs to be switched from a kernel space to a user space for processing, and then return to the kernel space from the user space. The Fuse passthrough function allows direct processing of the operations in the kernel space in some cases, to reduce unnecessary context switching between the user space and the kernel space.

In some optional embodiments, based on the embodiment shown in FIG. 13, the Sync client or the daemon may implement encrypted data storage and transmission through a Go Encrypted Filesystem (gocryptfs) encryption tool to improve data security. The gocryptfs encryption tool is a Fuse encryption tool that uses Fuse to implement transparent file system encryption and decryption functions. For example, when reading a file, the first application initiates a read file operation request. The first subsystem acquires the read file operation request, and transfers the request to the Fuse kernel module through a VFS layer. The Fuse kernel module transfers the read file operation request to a gocryptfs daemon in the user space. The gocryptfs daemon is a Fuse daemon with a gocryptfs encryption function. The gocryptfs daemon reads encrypted first data from a ramfs encrypted file, and decrypts the first data to obtain second data, which is returned to the first application through the Fuse kernel module and the VFS layer. For another example, when writing a file, the first application initiates a write file operation request. The first subsystem transfers the write file operation request to the Fuse kernel module through a VFS layer. The Fuse kernel module transfers the write file operation request to a gocryptfs daemon in the user space. The gocryptfs daemon encrypts to-be-written data in the write file operation request to obtain encrypted third data, stores the third data in a ram encrypted directory through ramfs, and sends the write file operation request corresponding to the third data to the host subsystem through IPC, to be updated to the UFS through the Sync server of the host subsystem. Encryption and decryption may be performed through the gocryptfs tool before the file operation request in S731 of FIG. 13 enters the Ramfs handle and is enqueued, which is not shown in the figure.

According to the method of the embodiments of the present disclosure, the Sync client is implemented through the Fuse architecture, so that the synchronization function of the Sync client is implemented in the user space without modifying kernel code, thereby avoiding an impact of a data operation request from an application on an operating system.

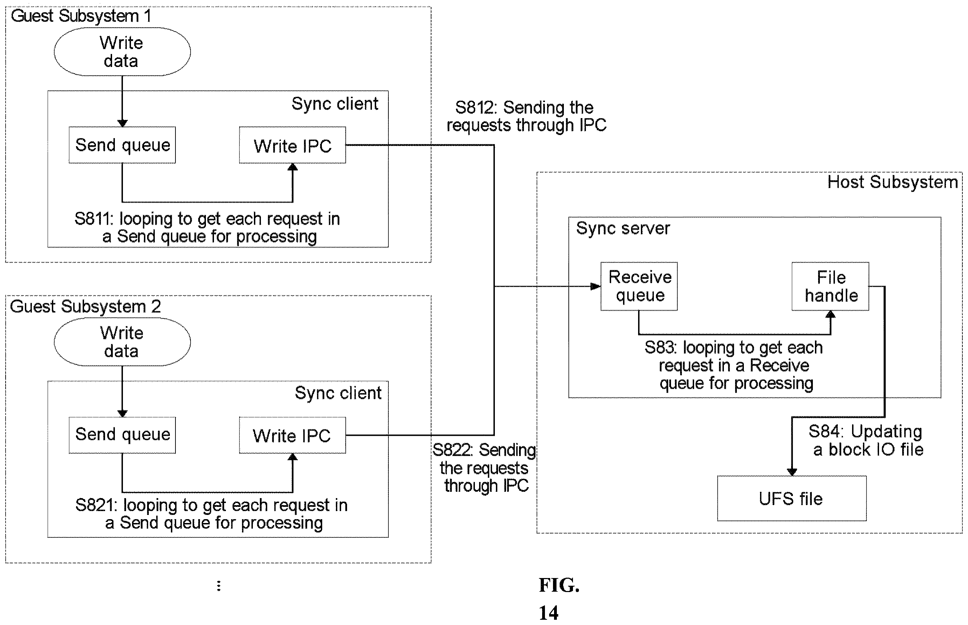

In some optional embodiments, FIG. 14 is a schematic diagram illustrating a request queue according to yet another exemplary embodiment of the present disclosure. As shown in FIG. 14, using a guest subsystem 1 as an example, an operation process related to the request queue includes:
S811: Looping to get each request in a Send queue for processing. To be specific, data operation requests are sequentially read from the send queue, and IPC is written based on the data operation requests. Writing IPC refers to writing the read data operation requests into an IPC pipe buffer.
S812: Sending the requests through IPC. To be specific, the data operation requests are sent to the host subsystem through IPC, and written into a receive queue through the Sync server.
S821 and S822 of the guest subsystem 2 are similar to S811 and S812 of the guest subsystem 1, and are not described in detail herein.
S83: Looping to get each request in a Receive queue for processing. To be specific, the Sync server cyclically reads each data operation request in the receive queue to the File handle.
S84: Updating a block IO file. To be specific, the Sync server updates the block IO file through the File handle.

According to the method for data storage in a SOC provided in the embodiments of the present disclosure, the guest subsystem communicates with the synchronization server of the host subsystem through the synchronization client, and performs persistent data storage by using a UFS access capability of the host subsystem. Meanwhile, the guest subsystem stores a data image in a local file system to meet concurrent access and fast reading/writing requirements.

The embodiments of the present disclosure described above may be implemented separately, or in any combination without conflict, and may be specifically set based on an actual requirement, which is not limited in the present disclosure.

Any one of the data storage methods in a SOC provided in the embodiments of the present disclosure may be performed by any suitable electronic device with a data processing capability, including but not limited to a terminal device, a server, and other electronic devices. Alternatively, any one of the data storage methods in a SOC provided in the embodiments of the present disclosure may be performed by a processor. For example, the processor performs, by calling a corresponding instruction stored in a memory, any one of the data storage methods in a SOC mentioned in the embodiments of the present disclosure. This is not repeated below.

### Exemplary Apparatus

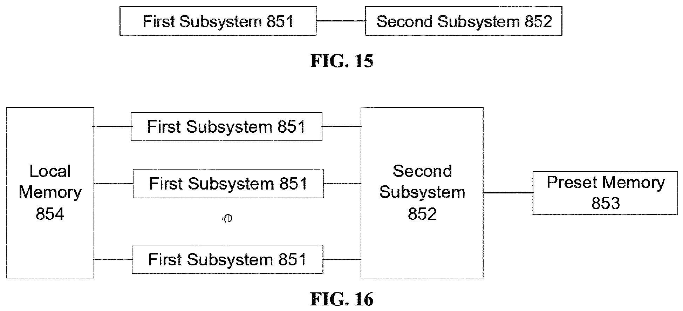

FIG. 15 is a schematic diagram illustrating a structure of an apparatus for data storage in a SOC according to an exemplary embodiment of the present disclosure. The apparatus for data storage in a SOC provided in this embodiment of the present disclosure may be used for implementing the method for data storage in a SOC provided in the above embodiments of the present disclosure. The apparatus for data storage in a SOC shown in FIG. 15 may include a first subsystem 851 and a second subsystem 852.

The first subsystem 851 is configured with a synchronization client.

The second subsystem 852 is configured with a synchronization server.

The second subsystem 852 is coupled to the first subsystem 851.

The first subsystem 851 is configured for acquiring, through the synchronization client, a data operation request from a first application, and sending, through the synchronization client, the data operation request to the second subsystem 852.

The second subsystem 852 is configured for receiving, through the synchronization server, the data operation request, and performing, through the synchronization server based on the data operation request, a data operation on a storage area in a preset memory corresponding to the data operation request.

In some optional embodiments, there are one or more first subsystems.

FIG. 16 is a schematic diagram illustrating a structure of an apparatus for data storage in a SOC according to another exemplary embodiment of the present disclosure.

In some optional embodiments, based on the embodiment shown above in FIG. 15, as shown in FIG. 16, the apparatus provided in the embodiments of the present disclosure may further include a preset memory 853, coupled to the second subsystem.

In some optional embodiments, based on the embodiment shown above in FIG. 15, the first subsystem is configured for:
Writing, through the synchronization client, the data operation request into a first request queue; reading, through the synchronization client, the data operation request from the first request queue; and sending, through the synchronization client, the read data operation request to the second subsystem.

In some optional embodiments, the first subsystem is specifically configured for sending, through the synchronization client, the read data operation request to the second subsystem in an IPC mode.

In some optional embodiments, based on any one of the above embodiments, the second subsystem is specifically configured for: writing, through the synchronization server, the data operation request into a second request queue; reading, through the synchronization server, a data operation request from the second request queue; and performing, through the synchronization server based on the read data operation request, the data operation on the storage area in the preset memory corresponding to the data operation request.

In some optional embodiments, based on any one of the above embodiments, the first subsystem is further configured for performing, through the synchronization client based on the data operation request, a data operation on a storage area in a local memory corresponding to the first subsystem.

In some optional embodiments, based on any one of the above embodiments, the first subsystem is further configured for performing, based on the data operation request, a data operation on a storage area in a local memory corresponding to the first subsystem.

In some optional embodiments, based on any one of the above embodiments, as shown in FIG. 16, the apparatus of the embodiments of the present disclosure further includes a local memory 854, coupled to the first subsystem.

In some optional embodiments, the first subsystem is specifically configured for: determining, through the synchronization client, a request type of the data operation request; and sending, through the synchronization client in response to the request type being a first preset type, the data operation request to the second subsystem; or skipping, through the synchronization client, in response to the request type being a second preset type, an operation of sending the data operation request to the second subsystem.

In some optional embodiments, based on any one of the above embodiments, the second subsystem manages the preset memory through a UFS file system.

In some optional embodiments, based on any one of the above embodiments, the apparatus of the embodiments of the present disclosure may further include a booting module.

The booting module is configured for: loading, at a first preset stage of a startup process of the SOC, data corresponding to the first subsystem from the preset memory and writing the data corresponding to the first subsystem into the storage area in the local memory corresponding to the first subsystem.

In some optional embodiments, based on any one of the above embodiments, the second subsystem 852 is further configured for: mounting, at a boot stage of the second subsystem, a storage area in the preset memory corresponding to the first subsystem to a first directory, to enable the second subsystem to access the preset memory through the synchronization server based on the first directory.

In some optional embodiments, the first subsystem 851 is further configured for: mounting, at a boot stage of the first subsystem, the storage area in the local memory corresponding to the first subsystem to a second directory, to enable the first subsystem 851 to access the storage area corresponding to the first subsystem 851 through the synchronization client based on the second directory.

In some optional embodiments, the first subsystem 851 is specifically configured for mounting the storage area in the local memory corresponding to the first subsystem to the second directory by Filesystem in Userspace.

The first subsystem 851 is further configured for: after acquiring the data operation request from the first application through the synchronization client, performing, through a Fuse daemon corresponding to the Fuse based on the data operation request, the data operation on the storage area in the local memory corresponding to the first subsystem 851; or performing, through a Fuse daemon corresponding to the Fuse based on the data operation request through a Fuse daemon corresponding to the Fuse, the data operation on the storage area in the local memory 854 corresponding to the first subsystem 851, and sending the data operation request to the second subsystem.

In some optional embodiments, the first subsystem 851 is specifically configured for:

Reading, through the synchronization client in response to the request type of the data operation request being a read operation request, first data corresponding to the data operation request from the local memory 854, the first data being encrypted data; decrypting, through the synchronization client, the first data to obtain decrypted second data; and transmitting, through the synchronization client, the second data to the first application.

In some optional embodiments, the first subsystem 851 is specifically configured for:
determining, through the synchronization client in response to the request type of the data operation request being a write operation request, to-be-written data from the write operation request; encrypting, through the synchronization client, the to-be-written data to obtain encrypted third data; writing the third data into the local memory 854 through the synchronization client; and sending, through the synchronization client, the write operation request corresponding to the third data to the second subsystem 852.

The embodiments of the present disclosure described above may be implemented separately, or in any combination without conflict, and may be specifically set based on an actual requirement, which is not limited in the present disclosure.

For beneficial technical effects corresponding to the exemplary embodiment of this apparatus, refer to the corresponding beneficial technical effects of the exemplary method section described above, which are not repeated herein.

### Exemplary Electronic Device

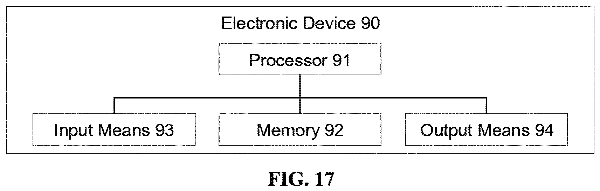

FIG. 17 is a diagram illustrating a structure of an electronic device according to an embodiment of the present disclosure. The electronic device 90 includes at least one processor 91 and a memory 92.

The processor 91 may be a central processing unit (CPU) or another form of processing unit having a data processing capability and/or an instruction execution capability, and may control another component in the electronic device 90 to perform a desired function.

The memory 92 may include one or more computer program products. The computer program product may include various forms of computer readable storage media, such as a volatile memory and/or a non-volatile memory. The volatile memory may include, for example, a RAM and/or a cache. The non-volatile memory may include, for example, a read-only memory (ROM), a hard disk, or a flash memory. The computer readable storage medium may store one or more computer program instructions. The processor 91 may run the one or more computer program instructions to implement the method and/or other desired functions in the foregoing embodiments of the present disclosure.

In an example, the electronic device 90 may further include an input means 93 and an output means 94. The components are interconnected through a bus system and/or other forms of connection mechanisms (not shown).

The input means 93 may further include, for example, a touchscreen, a microphone, or various sensors. The sensors may include, for example, an image sensor (such as a camera or a video camera), lidar, millimeter-wave radar, ultrasonic radar, a positioning sensor, a pressure sensor, an air quality sensor, and a temperature sensor. The image sensor, lidar, millimeter-wave radar, ultrasonic radar, and the like may be configured for perceiving a surrounding environment, that is, detecting dynamic and static objects in the surrounding environment. The dynamic and static objects may include, for example, static objects such as lane lines, roadsides, arrows, signs, trees, and buildings, and dynamic objects such as surrounding vehicles, pedestrians, and cyclists. The positioning sensor is configured for locating a mobile device (such as an ego vehicle or a robot) on which the electronic device is located. The positioning sensor may include, for example, an inertial measurement unit (IMU) or a global positioning system (GPS). The pressure sensor is configured for detecting seat pressure. The temperature sensor may be configured for detecting a temperature inside a cockpit of a vehicle. The air quality sensor may be configured for detecting quality of air inside a cockpit of a vehicle.

The output means 94 may output various information to the outside, and may include, for example, a display, a loudspeaker, and a communication network and a remote output means connected thereto.

Certainly, for simplicity, only some components in the electronic device 90 that are related to the present disclosure are shown in FIG. 17, and components such as a bus and an input/output interface are omitted. Besides, the electronic device 90 may further include any other appropriate components depending on specific applications.

In some optional embodiments, the embodiments of the present disclosure further provide a SOC, including the apparatus for data storage in a SOC according to any one of the above embodiments.

### Exemplary Computer Program Product And Computer Readable Storage Medium

In addition to the foregoing method and device, the embodiments of the present disclosure may also provide a computer program product including computer program instructions that, when run by a processor, cause the processor to perform the steps of the method according to the embodiments of the present disclosure that is described in the "Exemplary Method" section.

The computer program product may be program code, written with one or any combination of a plurality of programming languages, which is configured for performing the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer readable storage medium, on which computer program instructions are stored. The computer program instructions, when run by a processor, cause the processor to perform the steps of the method according to the embodiments of the present disclosure that is described in the "exemplary method" section.

The computer readable storage medium may be one readable medium or any combination of a plurality of readable media. The readable medium may be a readable signal medium or a readable storage medium. The readable storage medium includes, for example, but is not limited to electrical, magnetic, optical, electromagnetic, infrared, or semiconductor systems, apparatuses, or devices, or any combination of the above. More specific examples (a non-exhaustive list) of the readable storage medium include: an electrical connection with one or more conducting wires, a portable disk, a hard disk, a RAM, a ROM, an erasable programmable ROM (an EPROM or a flash memory), an optical fiber, a portable compact disk ROM (CD-ROM), an optical storage device, a magnetic storage device, or any suitable combination of the above.

Basic principles of the present disclosure are described above in combination with specific embodiments. However, the advantages, superiorities, effects, and the like mentioned in the present disclosure are merely examples rather than limitations, and it should not be considered that these advantages, superiorities, effects, and the like are necessary for each of the embodiment of the present disclosure. In addition, specific details disclosed above are merely for examples and for ease of understanding, rather than limitations. The details described above do not limit that the present disclosure must be implemented by using the foregoing specific details.

A person skilled in the art may make various modifications and variations to the present disclosure without departing from the spirit and scope of this application. The present disclosure is intended to cover these modifications and variations provided that they fall within the scope of protection defined by the claims of the present disclosure or equivalents thereof.

## Claims

1. A method for data storage in a system on chip (SOC), **characterized by** comprising:
acquiring (210), by a first subsystem (851) in the SOC through a synchronization client, a data operation request from a first application, and sending (220), through the synchronization client, the data operation request to a second subsystem (852) in the SOC; and
receiving (230), by the second subsystem (852) through a synchronization server, the data operation request, and performing (240), through the synchronization server based on the data operation request, a data operation on a storage area in a preset memory corresponding to the data operation request.

2. The method according to claim 1, wherein the sending (220), through the synchronization client, the data operation request to a second subsystem (852) in the SOC comprises:
writing (2210), by the first subsystem (851) through the synchronization client, the data operation request into a first request queue;
reading (2220), by the first subsystem (851) through the synchronization client, the data operation request from the first request queue; and
sending (2230), by the first subsystem (851) through the synchronization client, the read data operation request to the second subsystem (852).

3. The method according to claim 2, wherein the sending (2230), by the first subsystem (851) through the synchronization client, the read data operation request to the second subsystem (852) comprises:
sending, by the first subsystem (851) through the synchronization client, the read data operation request to the second subsystem (852) in an inter-processor communication (IPC) mode.

4. The method according to claim 1, wherein the performing (240), through the synchronization server based on the data operation request, a data operation on a storage area in a preset memory corresponding to the data operation request comprises:
writing (2410), by the second subsystem (852) through the synchronization server, the data operation request into a second request queue;
reading (2420), by the second subsystem (852) through the synchronization server, a data operation request from the second request queue; and
performing (2430), by the second subsystem (852) through the synchronization server based on the read data operation request, the data operation on the storage area in the preset memory corresponding to the data operation request.

5. The method according to claim 1, further comprising:
performing (310), by the first subsystem (851) through the synchronization client based on the data operation request, a data operation on a storage area in a local memory corresponding to the first subsystem (851).

6. The method according to claim 5, wherein the sending (220), through the synchronization client, the data operation request to a second subsystem (852) in the SOC comprises:
determining (2201), by the first subsystem (851) through the synchronization client, a request type of the data operation request; and
sending (2202), by the first subsystem (851) through the synchronization client in response to the request type being a first preset type, the data operation request to the second subsystem (852); or
skipping (2203), by the first subsystem (851) through the synchronization client in response to the request type being a second preset type, an operation of sending the data operation request to the second subsystem (852).

7. The method according to claim 5, wherein the second subsystem (852) manages the preset memory through a universal flash storage (UFS) file system; and the method further comprises:
loading (410), at a first preset stage of a startup process of the SOC, data corresponding to the first subsystem (851) from the preset memory and writing the data corresponding to the first subsystem (851) into the storage area in the local memory corresponding to the first subsystem (851); and
mounting (420), by the second subsystem (852) at a boot stage of the second subsystem (852), a storage area in the preset memory corresponding to the first subsystem (851) to a first directory, to enable the second subsystem (852) to access the preset memory through the synchronization server based on the first directory.

8. The method according to claim 7, further comprising:
mounting (510), by the first subsystem (851) at a boot stage of the first subsystem (851), the storage area in the local memory corresponding to the first subsystem (851) to a second directory, to enable the first subsystem (851) to access the storage area corresponding to the first subsystem (851) through the synchronization client based on the second directory.

9. The method according to claim 8, wherein the mounting (510), by the first subsystem (851), the storage area in the local memory corresponding to the first subsystem (851) to a second directory comprises:
mounting (5110), by the first subsystem (851), the storage area in the local memory corresponding to the first subsystem (851) to the second directory by Filesystem in Userspace (Fuse); and
after the acquiring (210), by a first subsystem (851) through the synchronization client, a data operation request from a first application, the method further comprises:
performing (3110), by the first subsystem (851) through a Fuse daemon corresponding to the Fuse based on the data operation request, the data operation on the storage area in the local memory corresponding to the first subsystem (851); or
performing (3110), by the first subsystem (851) through a Fuse daemon corresponding to the Fuse based on the data operation request, the data operation on the storage area in the local memory corresponding to the first subsystem (851), and sending the data operation request to the second subsystem (852).

10. The method according to any one of claims 5 to 9, wherein the performing (310), by the first subsystem (851) through the synchronization client based on the data operation request, a data operation on a storage area in a local memory corresponding to the first subsystem (851) comprises:
reading (3101), by the first subsystem (851) through the synchronization client in response to the request type of the data operation request being a read operation request, first data corresponding to the data operation request from the local memory, the first data being encrypted data;
decrypting (3102), by the first subsystem (851) through the synchronization client, the first data to obtain decrypted second data; and
transmitting (3103), by the first subsystem (851) through the synchronization client, the second data to the first application; or
determining (31a0), by the first subsystem (851) through the synchronization client in response to the request type of the data operation request being a write operation request, to-be-written data from the write operation request;
encrypting (31b0), by the first subsystem (851) through the synchronization client, the to-be-written data to obtain encrypted third data; and
writing (31c0), by the first subsystem (851) through the synchronization client, the third data into the local memory; and
the sending (220), through the synchronization client, the data operation request to a second subsystem (852) in the SOC comprises:
sending (22a0), by the first subsystem (851) through the synchronization client, the write operation request corresponding to the third data to the second subsystem (852).

11. An apparatus for data storage in a system on chip (SOC), **characterized by** comprising:
a first subsystem (851), configured with a synchronization client; and
a second subsystem (852), configured with a synchronization server, wherein
the first subsystem (851) is configured for acquiring, through the synchronization client, a data operation request from a first application, and sending, through the synchronization client, the data operation request to the second subsystem (852); and
the second subsystem (852) is configured for receiving, through the synchronization server, the data operation request, and performing, through the synchronization server based on the data operation request, a data operation on a storage area in a preset memory corresponding to the data operation request.

12. The apparatus according to claim 11, wherein the data operation request is sent, through the synchronization client, to a second subsystem (852) in the SOC by:
writing, by the first subsystem (851) through the synchronization client, the data operation request into a first request queue;
reading, by the first subsystem (851) through the synchronization client, a data operation request from the first request queue; and
sending, by the first subsystem (851) through the synchronization client, the read data operation request to the second subsystem (852).

13. A non-transitory computer readable storage medium, on which a computer program is stored, **characterized by** that the computer program, when executed by a processor, causes the processor to implement the method according to any one of claims 1 to 10.

14. An electronic device (90), **characterized by** comprising:
a processor (91); and
a memory (92), configured for storing instructions executable by the processor (91), wherein
the processor (91) is configured for reading the executable instructions from the memory (92), and executing the instructions to implement the method according to any one of claims 1 to 10.

15. A system on chip, **characterized by** comprising the apparatus according to claim 11.
